# EUROPÄISCHE PATENTSCHRIFT

(11) **EP 3 941 018 B1**
(45) Veröffentlichungstag und Bekanntmachung des Hinweises auf die Patenterteilung: **18.02.2026**
(21) Anmeldenummer: 21183647.3
(22) Anmeldetag: 05.07.2021
(51) Int. Cl.: H04L 9/32, H04L 9/40

(54) **VERFAHREN UND VORRICHTUNGEN ZUM BEREITSTELLEN UND ZUM EMPFANGEN VON MESSDATEN UND VERFAHREN UND VORRICHTUNG ZUR KOMMUNIKATION ZWISCHEN EINEM FAHRZEUGSENSOR EINES FAHRZEUGS UND EINEM STEUERGERÄT DES FAHRZEUGS**
METHOD AND DEVICES FOR PROVIDING AND RECEIVING MEASUREMENT DATA AND METHOD AND DEVICE FOR COMMUNICATION BETWEEN A VEHICLE SENSOR OF A VEHICLE AND A CONTROLLER OF THE VEHICLE
PROCÉDÉ ET DISPOSITIF DE FOURNITURE ET DE RÉCEPTION DE DONNÉES DE MESURE ET PROCÉDÉ ET DISPOSITIF DE COMMUNICATION ENTRE UN CAPTEUR DE VÉHICULE D'UN VÉHICULE ET UN APPAREIL DE COMMANDE DU VÉHICULE

(30) Priorität: 15.07.2020 DE 102020208806
(43) Veröffentlichungstag der Anmeldung: 19.01.2022
(73) Patentinhaber: Robert Bosch GmbH, 70442 Stuttgart (DE)
(72) Erfinder: Horstbrink, Michael, 70469 Stuttgart (DE); Shokrollahi, Jamshid, 71642 Ludwigsburg (DE)

(56) Entgegenhaltungen:
- DE-A1- 102013 206 185
- DE-A1- 102013 206 202
- US-A1- 2009 268 911

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Im Automobilbereich können Sensoren wie Drucksensoren unterschiedliche Anwendungen haben, insbesondere im Motorbereich. Für Fahrzeugbesitzer kann es verlockend sein, ein Verhalten solcher Sensoren für unterschiedliche Anwendungen zu modifizieren, wie beispielsweise zum Tuning des Fahrzeugs, d. h. Leistungserhöhung über vom Hersteller spezifizierte Werte hinaus. Solche Manipulationen können vorgenommen werden, indem eine Firmware oder eine Kommunikation zwischen einem Sensor und einem Steuergerät wie einem Motorsteuergerät (ECU, Engine Control Unit) modifiziert wird. Die Kommunikation zu modifizieren kann im Allgemeinen einfacher sein und kann beispielsweise durch Tuner beim sogenannten Box Tuning genutzt werden. Die DE 10 2009 002 396 A1 stellt ein Schutzverfahren für Sensoren unter der Annahme vor, dass es einen bidirektionalen, keinen unidirektionalen, Kommunikationskanal zwischen Sensor und ECU gibt. Ferner stellt der sogenannte Rolling Code ein übliches Verfahren für eine Art von Systemen für schlüssellosen Zugang dar. Die DE 10 2013 206 185 A1 beschreibt ein Verfahren zur Datenübertragung zwischen einem Sensor und einer elektronischen Steuer- und/oder Regeleinrichtung, wobei die übertragenen Sensordaten und der Sensor gegen eine Manipulation gesichert werden. Bei diesem Verfahren gibt es zwei Integritätsschutzwerte für mehrere Kommunikationswerte, sodass die zu schützenden Werte Überlappungen miteinander aufweisen. Die US 2009/268911 A1 und die DE 10 2013 206202 A1 offenbaren weiteren Stand der Technik.

### Offenbarung der Erfindung

Vor diesem Hintergrund werden mit dem hier vorgestellten Ansatz ein Verfahren, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere eine hinsichtlich Manipulationen geschützte bzw. gesicherte Übertragung von Messdaten eines Fahrzeugsensors zu einem Steuergerät realisiert werden. Hierbei werden beispielsweise sowohl dem Fahrzeugsensor als auch dem Steuergerät bekannte, zusätzliche Messdaten mindestens eines anderen Fahrzeugsensors zur Erzeugung eines Nachrichtenauthentifizierungscodes oder einer ähnlichen Authentifizierungsinformationen verwendet. Vorteilhafterweise kann gemäß Ausführungsformen insbesondere eine Sicherheit der Kommunikation zwischen Fahrzeugsensor und Steuergerät erhöht werden. Insbesondere kann eine Kommunikationssicherheit für eine sogenannte SENT-Kommunikation (SENT = Single Edge Nibble Transmission) verbessert werden. Eine standardmäßige SENT-Kommunikation ist eine unidirektionale Kommunikation vom Fahrzeugsensor zum Steuergerät. So können Manipulationsversuche, beispielsweise in Gestalt der sogenannten Freshness-Challenge, bei der ein Replay-Angreifer eine alte Nachricht wiederholt, die in einer anderen Kommunikationsrunde gesichert wurde, zuverlässig vereitelt oder zumindest erschwert werden.

Es wird ein Verfahren zum Bereitstellen von Messdaten eines Fahrzeugsensors eines Fahrzeugs für ein Steuergerät des Fahrzeugs vorgestellt, wobei das Verfahren folgende Schritte aufweist:
Bestimmen einer senderseitigen Authentifizierungsinformation zum Authentifizieren der an das Steuergerät zu übertragenden Messdaten des Fahrzeugsensors, wobei die senderseitige Authentifizierungsinformation unter Verwendung einer Bestimmungsvorschrift und sowohl dem Fahrzeugsensor als auch dem Steuergerät zugänglicher weiterer Messdaten zumindest eines weiteren Fahrzeugsensors des Fahrzeugs bestimmt wird; und

Erzeugen einer Nachricht zur Ausgabe an das Steuergerät unter Verwendung der Messdaten und der senderseitigen Authentifizierungsinformation.

Dieses Verfahren kann beispielsweise in Software oder Hardware oder in einer Mischform aus Software und Hardware beispielsweise in einer Vorrichtung implementiert sein. Bei dem Fahrzeug kann es sich um ein Kraftfahrzeug handeln, insbesondere um ein Landfahrzeug, Wasserfahrzeug oder Luftfahrzeug, beispielsweise einen Personenkraftwagen oder ein Nutzfahrzeug, insbesondere mit einem Verbrennungsmotor. Die Authentifizierungsinformation kann einem Nachrichtenauthentifizierungscode (MAC, Message Authentication Code) oder einem Teil dessen entsprechen, von diesem abgeleitet sein oder ihm ähneln. Der Fahrzeugsensor kann ausgebildet sein, um mindestens eine Messgröße zu erfassen. Der zumindest eine weitere Fahrzeugsensor kann ausgebildet sein, um zumindest eine von der mindestens einen Messgröße des Fahrzeugsensors verschiedene, weitere Messgröße zu erfassen. Die Nachricht kann die Messdaten und die senderseitige Authentifizierungsinformation umfassen. Das Verfahren kann auch einen Schritt des Ausgebens der Nachricht aufweisen. Im Schritt des Ausgebens kann die Nachricht an eine Schnittstelle zu dem Steuergerät ausgegeben werden. Die weiteren Messdaten können indirekt durch physikalische Beeinflussung der Messdaten zugänglich sein. Die weiteren Messdaten können dem Fahrzeugsensor indirekt zugänglich sein, wobei zugrundeliegende Größen auch die Messdaten beeinflussen können, die durch den Fahrzeugsensor gemessen werden.

Gemäß einer Ausführungsform kann der Fahrzeugsensor als ein Drucksensor oder Kraftstoffleistendrucksensor ausgeführt sein. Zusätzlich oder alternativ kann das Steuergerät als ein Motorsteuergerät ausgeführt sein. Eine solche Ausführungsform bietet den Vorteil, dass Messdaten auf sichere Weise übertragen werden können, um vor dem Hintergrund möglichen Tunings, insbesondere sogenannten Box-Tunings, verbesserten Schutz zu bieten. So kann eine zuverlässige Manipulationserfassung bzw. ein Schutz für Sensoren, insbesondere Drucksensoren wie Kraftstoffleistendrucksensoren realisiert werden.

Auch kann im Schritt des Bestimmens die senderseitige Authentifizierungsinformation unter Verwendung weiterer Messdaten bestimmt werden, die mindestens einen Betriebsparameter des Fahrzeugs in einem physikalischen Wirkzusammenhang und zusätzlich oder alternativ in einem funktionalen Wirkzusammenhang mit den Messdaten repräsentieren und zusätzlich oder alternativ eine Umgebungsbedingung des Fahrzeugs repräsentieren. Eine solche Ausführungsform bietet den Vorteil, dass insbesondere sogenannte Replay-Angriffe auf eine Kommunikation zwischen dem Fahrzeugsensor und dem Steuergerät zumindest erschwert oder auch verhindert werden können, indem mit den weiteren Messdaten für einen potentiellen Angreifer unvorhersehbare Daten verwendet werden.

Insbesondere können im Schritt des Bestimmens die weiteren Messdaten von einem Positionssensor für eine Position einer Kurbelwelle des Fahrzeugs, von einem Drehzahlsensor für eine Motordrehzahl und zusätzlich oder alternativ von einem Temperatursensor für eine Temperatur zumindest einer Komponente des Fahrzeugs stammen. Der Fahrzeugsensor kann eine Komponente des Fahrzeugs repräsentieren. Somit können schnell veränderliche Messdaten, wie beispielsweise eine Motordrehzahl und zusätzlich oder alternativ eine Kurbelwellenposition, und zusätzlich oder alternativ langsam veränderliche Messdaten, wie beispielsweise eine Temperatur, als die weiteren Messdaten verwendet werden. Eine solche Ausführungsform bietet den Vorteil, dass die Authentizität der in der Nachricht übertragenen Messdaten für das Steuergerät zuverlässig und sicher feststellbar ist.

Ferner kann im Schritt des Bestimmens die senderseitige Authentifizierungsinformation unter Verwendung einer Bestimmungsvorschrift bestimmt werden, die einen kryptografischen Algorithmus, einen geheimen kryptografischen Schlüssel und zusätzlich oder alternativ einen bei jeder ausgegebenen Nachricht inkrementierten Zählerwert aufweist. Hierbei können der Fahrzeugsensor und das Steuergerät identische Versionen des Algorithmus und des Schlüssels verwenden. Die Bestimmungsvorschrift kann Bestimmungsregeln gemäß einem sogenannten Rolling Code aufweisen. Eine solche Ausführungsform bietet den Vorteil, dass gängige Grundlagen hinsichtlich Authentifizierungsinformationen unaufwändig genutzt werden können, ergänzt durch die weiteren Messdaten als zusätzlicher Sicherheitsebene.

Zudem kann im Schritt des Bestimmens die senderseitige Authentifizierungsinformation unter Verwendung weiterer Messdaten bestimmt werden, die in einem dem Steuergerät bekannten zeitlichen Zusammenhang mit den Messdaten stehen und zusätzlich oder alternativ mit einem Zeitstempel versehen sind. Eine solche Ausführungsform bietet den Vorteil, dass eine zuverlässige und genaue Erkennung eines möglichen Angriffs auf die Kommunikation zwischen dem Fahrzeugsensor und dem Steuergerät ermöglicht wird, da unter Verwendung unplausibler weiterer Messdaten erzeugte Authentifizierungsinformationen sicher identifiziert werden können.

Auch kann das Verfahren einen Schritt des Erfassens der Messdaten unter Verwendung des Fahrzeugsensors umfassen. Zusätzlich oder alternativ kann das Verfahren einen Schritt des Einlesens der weiteren Messdaten von dem zumindest einen weiteren Fahrzeugsensor umfassen. So können die Messdaten bzw. die weiteren Messdaten auf exakte und einfach verfügbare Weise dem Verfahren zugeführt werden.

Es wird auch ein Verfahren zum Empfangen von Messdaten eines Fahrzeugsensors eines Fahrzeugs seitens eines Steuergeräts des Fahrzeugs vorgestellt, wobei das Verfahren folgende Schritte aufweist:
Einlesen einer gemäß einer Ausführungsform des vorstehend genannten Verfahrens erzeugten Nachricht;
Zerlegen der Nachricht, um die Messdaten und die senderseitige Authentifizierungsinformation zu erhalten;
Ermitteln einer empfängerseitigen Authentifizierungsinformation zum Authentifizieren der an das Steuergerät übertragenen Messdaten des Fahrzeugsensors, wobei die empfängerseitige Authentifizierungsinformation unter Verwendung der Bestimmungsvorschrift und der weiteren Messdaten ermittelt wird; und
Durchführen eines Vergleichs der empfängerseitigen Authentifizierungsinformation und der senderseitigen Authentifizierungsinformation miteinander, um abhängig von einem Ergebnis des Vergleichs eine Authentizität der Messdaten festzustellen.

Dieses Verfahren kann beispielsweise in Software oder Hardware oder in einer Mischform aus Software und Hardware beispielsweise in einem Steuergerät oder in einer Vorrichtung implementiert sein.

Gemäß einer Ausführungsform können im Schritt des Ermittelns die Messdaten bezüglich der weiteren Messdaten empfängerseitig auf Plausibilität geprüft werden. Hierbei kann zwischen den Messdaten und den weiteren Messdaten ein physikalischer Wirkzusammenhang und zusätzlich oder alternativ ein funktionaler Wirkzusammenhang bestehen. Zusätzlich oder alternativ kann der Schritt des Ermittelns unter Verwendung einer Frequenzmessung, einer Tiefpassfilterung, eines Phasendetektors, eines Quadratur-Demodulators und/oder einer messwerttypischen Signalcharakteristik, insbesondere einer Messwertschwankungsamplitude, durchgeführt werden. Eine solche Ausführungsform bietet den Vorteil, dass Angriffe auf die Kommunikation zwischen dem Fahrzeugsensor und dem Steuergerät weiter erschwert werden können, insbesondere sogenannte Replay-Angriffe.

Beispielsweise kann im Schritt des Ermittelns die Plausibilitätsprüfung unter Verwendung einer Frequenzmessung, einer Tiefpassfilterung, eines Phasendetektors, eines Quadratur-Demodulators, einer messwerttypischen Signalcharakteristik, insbesondere einer Messwertschwankungsamplitude, und zusätzlich oder alternativ mindestens einer modellierten Messgröße durchgeführt werden. Eine solche Ausführungsform bietet den Vorteil, dass die Authentizität der Messdaten einfach und zuverlässig festgestellt werden kann.

Es wird ferner ein Verfahren zur Kommunikation zwischen einem Fahrzeugsensor eines Fahrzeugs und einem Steuergerät des Fahrzeugs vorgestellt, wobei das Verfahren folgende Schritte aufweist:
Bereitstellen von Messdaten des Fahrzeugsensors für das Steuergerät gemäß einer Ausführungsform des vorstehend genannten Verfahrens zum Bereitstellen; und
Empfangen der Messdaten des Fahrzeugsensors seitens des Steuergeräts gemäß einer Ausführungsform des vorstehend genannten Verfahrens zum Empfangen.

Dieses Verfahren kann beispielsweise in Software oder Hardware oder in einer Mischform aus Software und Hardware beispielsweise in einer Vorrichtung implementiert sein. Die Kommunikation zwischen dem Fahrzeugsensor und dem Steuergerät kann unidirektional erfolgen, insbesondere lediglich in Richtung von dem Fahrzeugsensor zu dem Steuergerät.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein RAM, ROM, Flash-Speicher, EEPROM und/oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer-und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem ROM, einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einer Vorrichtung gemäß einem Ausführungsbeispiel;
Fig. 2 ein Ablaufdiagramm eines Verfahrens zum Bereitstellen gemäß einem Ausführungsbeispiel;
Fig. 3 ein Ablaufdiagramm eines Verfahrens zum Empfangen gemäß einem Ausführungsbeispiel; und
Fig. 4 ein Ablaufdiagramm eines Verfahrens zur Kommunikation gemäß einem Ausführungsbeispiel.

Bevor nachfolgend Ausführungsbeispiele der vorliegenden Erfindung eingehender beschrieben werden, wird zunächst kurz auf Hintergründe von Ausführungsbeispielen eingegangen.

Bei dem eingangs erwähnten Rolling Code hat der Absender, was hier dem Fahrzeugsensor bzw. insbesondere Drucksensor entspräche, einen monolithischen Zähler und erhöht den Zähler bei jedem berechtigten Befehl bzw. Sendevorgang. Der Empfänger, z.B. ein Türöffner, was hier dem Steuergerät bzw. insbesondere Motorsteuergerät entspräche, hat auch eine Kopie des Zählers. Der Türöffner akzeptiert einen Befehl nur dann, wenn die Zähler gleich sind oder der Zähler des Absenderbefehls etwas größer als sein eigener ist. So ist sichergestellt, dass das System auch funktioniert, wenn der Knopf für schlüssellosen Zugang gedrückt wurde, als der Türöffner nicht in Reichweite war. Das Konzept Rolling Code allein bzw. für sich genommen ist für den in der vorliegenden Anmeldung betrachteten Fall des Sensorschutzes bzw. Kommunikationsschutzes nicht geeignet. Damit das Konzept Rolling Code ordnungsgemäß funktioniert, soll der Zähler nach jeder berechtigten Kommunikation in einem nichtflüchtigen Speicher gespeichert werden. Andernfalls kann der Feind ein Reset des Sensors verlangen und wiederholt ältere Werte oder Werte seiner Wahl. Die Frequenz der zu sendenden Werte kann zulässige Schreibzyklen der Flash-Technologie übersteigen.

Bei einem Kommunikationsschutzkonzept ähnlich jenem aus der eingangs erwähnten DE 10 2013 206 185 A1 sind beispielsweise Sensormesswerte bzw. Sensorwerte durch M1 bis M6 dargestellt und stellen MAC-Werte (MAC = Message Authentication Code; Nachrichtenauthentifizierungscode) einen kryptographischen Nachrichtenauthentifizierungscode zum Integritätsschutz dar. Nach M3 wird der Wert MAC11 als Nachrichtenauthentifizierungscode für die Werte M1 bis M3 gesendet. Falls irgendwelche dieser Werte manipuliert sind, kann dies detektiert werden, indem MAC11 verifiziert wird. Nach M6 wird MAC12 zum Schutz von M4 bis M6 gesendet und auf MAC12 folgt MAC21 zum Schutz von MAC11 und MAC12. Falls M4 bis M6 manipuliert sind, wird dies anhand von MAC12 detektiert. Falls jedoch ein Angreifer M1 bis M3 und MAC11 insgesamt mit Werten aus einer älteren Sitzung ersetzt, kann dies unter Verwendung von MAC21 detektiert werden. Auf diese Weise wird die Kette der nach einem Reset gesendeten Werte behalten und eine Manipulation jedes Eintrags kann detektiert werden. Ein solches Konzept wie in der DE 10 2013 206 185 A1 ist für den vorliegend betrachteten Fall keine geeignete Lösung, wenn man berücksichtigt, dass bei jedem Reset des Sensors die älteren Werte verloren gehen und ein Angreifer eine Kette von älteren Werten aus einer anderen Sitzung nutzen kann.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

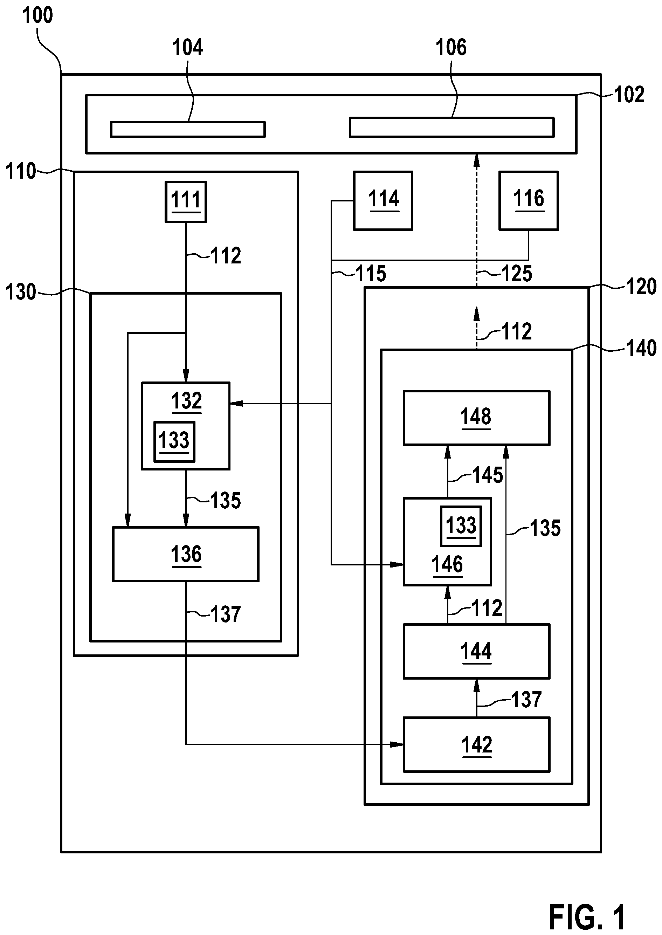

Fig. 1 zeigt eine schematische Darstellung eines Fahrzeugs 100 mit einer Vorrichtung gemäß einem Ausführungsbeispiel. Bei dem Fahrzeug 100 handelt es sich um ein Kraftfahrzeug, das beispielweise als ein Landfahrzeug, ein Wasserfahrzeug oder ein Luftfahrzeug ausgeführt sein kann. Gemäß dem hier dargestellten Ausführungsbeispiel handelt es sich bei dem Fahrzeug 100 lediglich beispielhaft um einen Personenkraftwagen. Das Fahrzeug 100 weist einen Motor 102, von dem in der Darstellung von Fig. 1 lediglich eine Kraftstoffleiste 104 und eine Kurbelwelle 106 gezeigt sind, einen Fahrzeugsensor, hier als erster Fahrzeugsensor 110 bezeichnet, mit mindestens einem Sensorelement 111 sowie beispielhaft lediglich zwei weitere Fahrzeugsensoren, hier als zweiter Fahrzeugsensor 114 und dritter Fahrzeugsensor 116 bezeichnet, und ein Steuergerät 120 auf.

Der Fahrzeugsensor bzw. erste Fahrzeugsensor 110 ist ausgebildet, um Messdaten 112 auszugeben. Genauer gesagt ist das mindestens eine Sensorelement 111 des ersten Fahrzeugsensors 110 ausgebildet, um mindestens eine Messgröße zu erfassen, und ist der erste Fahrzeugsensor 110 ausgebildet, um die erfasste Messgröße oder die erfassten Messgrößen als die Messdaten 112 auszugeben. Der zweite Fahrzeugsensor 114 und der dritte Fahrzeugsensor 116 sind ausgebildet, weitere Messgrößen 115 auszugeben.

Gemäß einem Ausführungsbeispiel ist der Fahrzeugsensor bzw. erste Fahrzeugsensor 110 als ein Drucksensor oder Kraftstoffleistendrucksensor ausgeführt. Insbesondere ist der erste Fahrzeugsensor 110 als ein Kraftstoffleistendrucksensor zum Erfassen eines Drucks in der Kraftstoffleiste 104 ausgeführt. Somit repräsentieren die Messdaten 112 Druckmesswerte in der Kraftstoffleiste 104. Zusätzlich oder alternativ ist hierbei das Steuergerät 120 als ein Motorsteuergerät ausgeführt. Das Steuergerät 120 ist somit ausgebildet, um den Motor 102 zu steuern. Die weiteren Fahrzeugsensoren, d. h. hier der zweite Fahrzeugsensor 114 und der dritte Fahrzeugsensor 116, weisen dabei optional einen Drehzahlsensor zum Erfassen einer Drehzahl des Motors 102, einen Positionssensor zum Erfassen einer Position der Kurbelwelle 106 und/oder einen Temperatursensor zum Erfassen einer Umgebungstemperatur, Motortemperatur oder einer anderen Temperatur auf. Somit repräsentieren die weiteren Messdaten 115 hierbei Drehzahlmesswerte, Positionsmesswerte und/oder Temperaturmesswerte.

Ferner sind eine Bereitstellungsvorrichtung 130 bzw. Vorrichtung zum Bereitstellen und eine Empfangsvorrichtung 140 bzw. Vorrichtung zum Empfangen vorgesehen. Gemäß dem in Fig. 1 dargestellten Ausführungsbeispiel ist die Bereitstellungsvorrichtung 130 als ein Teil des Fahrzeugsensors bzw. ersten Fahrzeugsensors 110 realisiert und ist die Empfangsvorrichtung 140 als ein Teil des Steuergeräts 120 ausgeführt. Gemäß einem anderen Ausführungsbeispiel kann oder können die Bereitstellungsvorrichtung 130 und/oder die Empfangsvorrichtung 140 auch als eigenständige Vorrichtung oder Vorrichtungen realisiert sein.

Die Bereitstellungsvorrichtung 130 ist ausgebildet, um die Messdaten 112 des Fahrzeugsensors bzw. ersten Fahrzeugsensors 110 für das Steuergerät 120 bereitzustellen. Die Bereitstellungsvorrichtung 130 ist beispielsweise ausgebildet, um die Messdaten 112 von dem mindestens einen Sensorelement 111 des ersten Fahrzeugsensors 110 und die weiteren Messdaten 115 von dem zweiten Fahrzeugsensor 114 und dem dritten Fahrzeugsensor 116 einzulesen. Diese weiteren Messdaten 115 brauchen dem Fahrzeugsensor 110 nicht direkt zugänglich zu sein, sondern die zugrundeliegenden Größen können auch die Messdaten 112 beeinflussen, die durch den Fahrzeugsensor 110 gemessen werden, z. B. aufgrund einer Öffnung/Schließung eines Einlass-/Auslass-Ventils oder Kraftstoffeinspritzvorgängen in Zusammenhang mit der Kurbelwellenposition.

Die Bereitstellungsvorrichtung 130 weist eine Bestimmungseinrichtung 132 und ein Erzeugungseinrichtung 136 auf. Die Bestimmungsvorrichtung 132 ist ausgebildet, um eine senderseitige Authentifizierungsinformation 135 zum Authentifizieren der an das Steuergerät 120 zu übertragenden Messdaten 112 des Fahrzeugsensors bzw. ersten Fahrzeugsensors 110 zu bestimmen. Dabei ist die Bestimmungseinrichtung 132 ausgebildet, um die senderseitige Authentifizierungsinformation 135 unter Verwendung einer Bestimmungsvorschrift 133 und der weiteren Messdaten 115, die sowohl dem ersten Fahrzeugsensor 110 als auch dem Steuergerät 120 zugänglich sind, zu bestimmen. Die Bestimmungseinrichtung 132 ist ferner ausgebildet, um die bestimmte senderseitige Authentifizierungsinformation 135 an die Erzeugungseinrichtung 136 weiterzuleiten. Die Erzeugungseinrichtung 136 ist ausgebildet, um unter Verwendung der Messdaten 112 und der senderseitigen Authentifizierungsinformation 135 eine Nachricht 137 zur Ausgabe an das Steuergerät 120 zu erzeugen. Die Nachricht 137 umfasst somit die Messdaten 112 und die senderseitige Authentifizierungsinformation 135.

Die Empfangsvorrichtung 140 ist ausgebildet, um die in der Nachricht 137 enthaltenen Messdaten 112 zu empfangen, d. h. um die Messdaten 112 des ersten Fahrzeugsensors 110 seitens bzw. auf Seiten des Steuergeräts 120 zu empfangen. Dazu weist die Empfangsvorrichtung 140 eine Einleseeinrichtung 142, eine Zerlegungseinrichtung 144, eine Ermittlungseinrichtung 146 und eine Durchführungseinrichtung 148 auf.

Die Einleseeinrichtung 142 ist ausgebildet, um die Nachricht 137 von der Bereitstellungsvorrichtung 130 einzulesen. Auch ist die Einleseeinrichtung 142 ausgebildet, um die eingelesene Nachricht 137 an die Zerlegungseinrichtung 144 weiterzuleiten. Die Zerlegungseinrichtung 144 ist ausgebildet, um die Nachricht 137 in die Messdaten 112 und die senderseitige Authentifizierungsinformation 135 zu zerlegen. Ferner ist die Zerlegungseinrichtung 144 ausgebildet, die Messdaten 112 an die Ermittlungseinrichtung 146 weiterzuleiten und die senderseitige Authentifizierungsinformation 135 an die Durchführungseinrichtung 148 weiterzuleiten. Die Ermittlungseinrichtung 146 ist ausgebildet, um eine empfängerseitige Authentifizierungsinformation 145 zum Authentifizieren der an das Steuergerät 120 übertragenen Messdaten 112 des Fahrzeugsensors bzw. ersten Fahrzeugsensors 110 zu ermitteln. Dabei ist die Ermittlungseinrichtung 146 ausgebildet, um die empfängerseitige Authentifizierungsinformation 145 unter Verwendung der Bestimmungsvorschrift 133 zu ermitteln und dabei auch die weiteren Messdaten 115 bezüglich der empfängerseitigen Messdaten 112 auf Plausibilität zu prüfen und/oder die Ermittlung unter Verwendung einer Frequenzmessung, einer Tiefpassfilterung, eines Phasendetektors, eines Quadratur-Demodulators und/oder einer messwerttypischen Signalcharakteristik, insbesondere einer Messwertschwankungsamplitude, durchzuführen. Die Ermittlungseinrichtung 146 ist zudem ausgebildet, um die empfängerseitige Authentifizierungsinformation 145 an die Durchführungseinrichtung 148 weiterzuleiten. Die Durchführungseinrichtung 148 ist ausgebildet, um einen Vergleich der empfängerseitigen Authentifizierungsinformation 145 und der senderseitigen Authentifizierungsinformation 135 miteinander durchzuführen, um abhängig von einem Ergebnis des Vergleichs eine Authentizität der Messdaten 112 festzustellen. Falls die Durchführungseinrichtung 148 einen Unterschied zwischen der empfängerseitigen Authentifizierungsinformation 145 und der senderseitigen Authentifizierungsinformation 135 erkennt, kann eine fehlende Authentizität der Messdaten 112 festgestellt werden. Dies ist beispielsweise der Fall, wenn durch einen potentiellen Angreifer anstelle der Nachricht 137 eine ähnliche oder teilweise identische Nachricht an das Steuergerät 120 gesendet wird.

Gemäß einem Ausführungsbeispiel ist die Empfangsvorrichtung 140 ausgebildet, um die Messdaten 112 dem Steuergerät 120 zur Verfügung zu stellen, wenn durch die Durchführungseinrichtung 148 die Authentizität der Messdaten 112 festgestellt wurde. Das Steuergerät 120 ist, beispielsweise ausgebildet, um unter Verwendung der Messdaten 112 ein Steuersignal zum Steuern des Motors 102 zu erzeugen.

Die Bestimmungseinrichtung 132 der Bereitstellungsvorrichtung 130 ist gemäß einem Ausführungsbeispiel ausgebildet, um die senderseitige Authentifizierungsinformation 135 unter Verwendung solcher weiterer Messdaten 115, die mindestens einen Betriebsparameter des Fahrzeugs 100 in einem physikalischen und/oder funktionalen Wirkzusammenhang mit den Messdaten 112 und/oder eine Umgebungsbedingung des Fahrzeugs 100 repräsentieren und/oder die in einem dem Steuergerät 120 bekannten zeitlichen Zusammenhang mit den Messdaten 112 stehen und/oder mit einem Zeitstempel versehen sind, und/oder unter Verwendung einer solchen Bestimmungsvorschrift 133 zu bestimmen, die einen kryptografischen Algorithmus, einen geheimen kryptografischen Schlüssel und/oder einen bei jeder ausgegebenen Nachricht 137 inkrementierten Zählerwert aufweist.

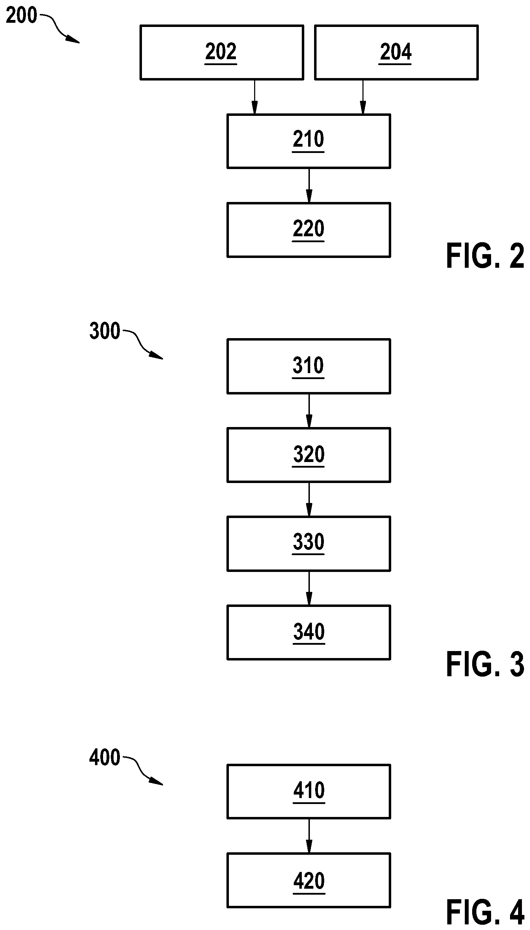

Fig. 2 zeigt ein Ablaufdiagramm eines Verfahrens 200 zum Bereitstellen gemäß einem Ausführungsbeispiel. Das Verfahren 200 zum Bereitstellen ist ausführbar, um Messdaten eines Fahrzeugsensors eines Fahrzeugs für ein Steuergerät des Fahrzeugs bereitzustellen. Dabei ist das Verfahren 200 zum Bereitstellen in Verbindung mit bzw. unter Verwendung von der Vorrichtung bzw. Bereitstellungsvorrichtung aus Fig. 1 oder einer ähnlichen Vorrichtung ausführbar.

Das Verfahren 200 zum Bereitstellen weist einen Schritt 210 des Bestimmens und einen Schritt 220 des Erzeugens auf. In dem Schritt 210 des Bestimmens wird eine senderseitige Authentifizierungsinformation zum Authentifizieren der an das Steuergerät zu übertragenden Messdaten des Fahrzeugsensors bestimmt. Hierbei wird die senderseitige Authentifizierungsinformation unter Verwendung einer Bestimmungsvorschrift und sowohl dem Fahrzeugsensor als auch dem Steuergerät zugänglicher weiterer Messdaten zumindest eines weiteren Fahrzeugsensors des Fahrzeugs bestimmt. Nachfolgend wird in dem Schritt 220 des Erzeugens unter Verwendung der Messdaten und der im Schritt 210 des Bestimmens bestimmten senderseitigen Authentifizierungsinformation eine Nachricht zur Ausgabe an das Steuergerät erzeugt.

Gemäß einem Ausführungsbeispiel umfasst das Verfahren 200 zum Bereitstellen auch einen Schritt 202 des Erfassens der Messdaten unter Verwendung des Fahrzeugsensors. Zusätzlich oder alternativ umfasst das Verfahren 200 zum Bereitstellen hierbei einen Schritt 204 des Einlesens der weiteren Messdaten von dem zumindest einen weiteren Fahrzeugsensor.

Fig. 3 zeigt ein Ablaufdiagramm eines Verfahrens 300 zum Empfangen gemäß einem Ausführungsbeispiel. Das Verfahren 300 zum Empfangen ist ausführbar, um Messdaten eines Fahrzeugsensors eines Fahrzeugs seitens eines Steuergeräts des Fahrzeugs zu empfangen. Dabei ist das Verfahren 300 zum Empfangen in Verbindung mit bzw. unter Verwendung von der Vorrichtung bzw. Empfangsvorrichtung aus Fig. 1 oder einer ähnlichen Vorrichtung ausführbar.

Das Verfahren 300 zum Empfangen weist einen Schritt 310 des Einlesens, einen Schritt 320 des Zerlegens, einen Schritt 330 des Ermittelns und einen Schritt 340 des Durchführens auf. Im Schritt 310 des Einlesens wird eine Nachricht eingelesen, die gemäß dem Verfahren aus Fig. 2 oder einem ähnlichen Verfahren erzeugt ist bzw. wurde. Nachfolgend wird im Schritt 320 des Zerlegens die im Schritt 310 des Einlesens eingelesen Nachricht zerlegt, um die Messdaten und die senderseitige Authentifizierungsinformation zu erhalten. Wiederum nachfolgend wird im Schritt 330 des Ermittelns eine empfängerseitige Authentifizierungsinformation zum Authentifizieren der an das Steuergerät übertragenen Messdaten des Fahrzeugsensors ermittelt. Dabei wird die empfängerseitige Authentifizierungsinformation unter Verwendung der Bestimmungsvorschrift und der weiteren Messdaten ermittelt. Nachfolgend wird im Schritt 340 des Durchführens ein Vergleich der empfängerseitigen Authentifizierungsinformation und der senderseitigen Authentifizierungsinformation miteinander durchgeführt, um abhängig von einem Ergebnis des Vergleichs eine Authentizität der Messdaten festzustellen.

Fig. 4 zeigt ein Ablaufdiagramm eines Verfahrens 400 zur Kommunikation gemäß einem Ausführungsbeispiel. Das Verfahren 400 zur Kommunikation ist ausführbar, um eine Kommunikation zwischen einem Fahrzeugsensor eines Fahrzeugs und einem Steuergerät des Fahrzeugs zu verwalten. Dabei ist das Verfahren 400 zur Kommunikation in Verbindung mit bzw. unter Verwendung von einer Vorrichtung ausführbar, welche die Bereitstellungsvorrichtung und die Empfangsvorrichtung aus Fig. 1 oder ähnliche Vorrichtungen umfasst.

Das Verfahren 400 zur Kommunikation umfasst einen Schritt 410 des Bereitstellens und einen Schritt 420 des Empfangens. In dem Schritt 410 des Bereitstellens werden gemäß dem Verfahren aus Fig. 2 oder einem ähnlichen Verfahren Messdaten des Fahrzeugsensors für das Steuergerät bereitgestellt. Somit umfasst der Schritt 410 des Bereitstellens als Teilschritte die Schritte des Verfahrens aus Fig. 2 oder eines ähnlichen Verfahrens. Nachfolgend werden in dem Schritt 420 des Empfangens gemäß dem Verfahren aus Fig. 3 oder einem ähnlichen Verfahren die Messdaten des Fahrzeugsensors seitens des Steuergeräts empfangen. Somit weist der Schritt 420 des Empfangens als Teilschritte die Schritte des Verfahrens aus Fig. 3 oder eines ähnlichen Verfahrens auf.

Unter Bezugnahme auf die vorstehend beschriebenen Figuren werden Ausführungsbeispiele nachfolgend nochmals mit anderen Worten und zusammenfassend erläutert.

Die Nachricht 137 mit den Authentifizierungsinformationen 135 weist eine Ähnlichkeit mit dem sogenannten Rolling Code auf. Jedoch ist ein dort verwendeter Zähler mit physikalischen Werten aus den weiteren Messdaten 115 erweitert oder durch diese ersetzt, die sowohl für den ersten Fahrzeugsensor 110 als auch für das Steuergerät 120 zugänglich sind und eine hohe Dynamik aufweisen. Dies können z. B. eine Motordrehzahl und/oder eine Kurbelwellenposition sein. Beide Werte sind dem Fahrzeugsensor 110 nicht direkt zugänglich, aber dieselben beeinflussen den Druck, der durch den Fahrzeugsensor 110 gemessen wird, z. B. aufgrund einer Öffnung/Schließung eines Einlass-/Auslass-Ventils oder Kraftstoffeinspritzvorgängen. Deshalb haben Kurbelwellenposition und Motordrehzahl einen Einfluss auf den Druckverlauf, der durch den ersten Fahrzeugsensor 110 erfasst wird. Außerdem könnte sich die Motordrehzahl plötzlich ändern, z. B. aufgrund einer Bremsung, Beschleunigung oder eines Fahrstufenwechsels des Fahrzeugs 100. Eine solche Änderung ist unvorhersehbar. Da die Authentifizierungsinformationen 135 und 145 über eine gewisse Zeitdauer hinweg berechnet werden, z. B. in der Größenordnung von 100 Millisekunden, kann im Falle eines wiedereingespielten Datensatzes und Authentifizierungsinformationen ein potentieller Angreifer nicht reagieren, wenn sich die Motordrehzahl während dieser Zeitdauer von beispielsweise 100 Millisekunden ändert, was zu einer Abweichung der aktuellen Kurbelwellenposition zu einem wiedereingespielten Druckmuster führt. Eine solche Abweichung kann durch das Steuergerät 120, genauer gesagt durch die Empfangsvorrichtung 140 detektiert werden, sodass das Wiedereinspielen bzw. ein so genannter Replay-Angriff selbst detektiert wird.

Eine mögliche Reaktion eines betrügerischen Gerätes bestünde beispielsweise darin, die Abweichung selbst, d. h. den Druck vom realen ersten Fahrzeugsensor 110 gegenüber dem wiedereingespielten Druckmuster, zu detektieren und ein Reset des ersten Fahrzeugsensors 110 zu fälschen, womit ein neuer MAC-Zyklus begonnen wird. Einige Resets von Sensoren könnten in einer realen Fahrzeugumgebung passieren, sodass dies lediglich ein Indiz für einen Betrug, aber kein Beweis wäre, wenn es nicht zu häufig geschieht. Um einen solchen Angriff zu verhindern, kann auch ein weiterer Messwert des ersten Fahrzeugsensors 110 in die MAC-Berechnung bzw. in die Bestimmung der senderseitigen Authentifizierungsinformation 135 inkludiert werden. Vorzugsweise ist dies ein kontinuierliches, sich langsam veränderndes Signal, wie beispielsweise eine Sensortemperatur, die durch das empfangende Steuergerät 120 modelliert werden kann. Da sich die Temperatur über die Zeit ändert und diese Änderungen unvorhersehbar sind, z. B. Wetteränderungen während eines Fahrzyklus, Erwärmung des Motorraums oder dergleichen, folgt die Temperatur von später wiedereingespielten Daten nicht der dann aktuellen Temperatur. Auch nach einem gefälschten Reset des ersten Fahrzeugsensors 110 müsste die Temperatur von neu angehängten Wiedereinspielungsdaten jedoch sowohl zur z.B. modellierten Temperatur als auch zu der Temperatur vor dem Reset passen, ohne dass es einen verdächtigen Sprung gibt, da es sich um eine kontinuierliche Messung handelt. Folglich bräuchte das betrügerische Gerät einen Wiedereinspielungsdatensatz über den gesamten relevanten vierdimensionalen Bereich von Druck, Motordrehzahl, Kurbelwellenposition (am Anfang des MAC-Zyklus) und Temperatur. Es würden sogar zumindest zwei derartige Wiedereinspielungsdatensätze benötigt, mit steigenden und fallenden Temperaturgradienten, um realen Temperaturänderungen zu folgen. Ein solcher für einen Betrug nötiger Aufwand dürfte kaum praktikabel sein, wenn man bedenkt, dass diese Menge von Wiedereinspielungsdaten wegen des einzigartigen geheimen AES-Schlüssels für jeden einzelnen Fahrzeugsensor generiert werden müsste.

Beispielhafte Überprüfungen in dem Steuergerät 120, genauer gesagt in der Empfangsvorrichtung 140 umfassen, sind aber nicht beschränkt auf eher einfache Algorithmen wie Frequenzmessung, z. B. FFT oder dergleichen, üblicherweise nach einer Anwendung eines Tiefpassfilters zur Unterdrückung von Oberschwingungen, Phasendetektor, Quadratur-Demodulator, auch IQ-Demodulator genannt, oder dergleichen, und eine Überprüfung einer Zeitverzögerung zwischen beispielsweise einer Kraftstoffeinspritzung und einem entsprechend gemessenen Druckabfall in der Kraftstoffleiste 104. Eine Hinzunahme von Signalcharakteristika wie einer Druckschwankungsamplitude könnte einen Schutz weiter erhöhen, falls dieselben durch das Steuergerät 120 modelliert werden können.

## Patentansprüche

1. Verfahren (200) zum Bereitstellen von Messdaten (112) eines Fahrzeugsensors (110) eines Fahrzeugs (100) für ein Steuergerät (120) des Fahrzeugs (100), wobei das Verfahren (200) folgende Schritte aufweist:
Bestimmen (210) einer senderseitigen Authentifizierungsinformation (135) zum Authentifizieren der an das Steuergerät (120) zu übertragenden Messdaten (112) des Fahrzeugsensors (110), wobei die senderseitige Authentifizierungsinformation (135) unter Verwendung einer Bestimmungsvorschrift (133) bestimmt wird; und
Erzeugen (220) einer Nachricht (137) zur Ausgabe an das Steuergerät (120) unter Verwendung der Messdaten (112) und der senderseitigen Authentifizierungsinformation (135),
**dadurch gekennzeichnet, dass**
im Schritt (210) des Bestimmens die senderseitige Authentifizierungsinformation (135) unter Verwendung von sowohl dem Fahrzeugsensor (110) als auch dem Steuergerät (120) zugänglicher weiterer Messdaten (115) zumindest eines weiteren Fahrzeugsensors (114, 116) des Fahrzeugs (100) bestimmt wird, wobei die weiteren Messdaten (115) von einem Positionssensor (114) für eine Position einer Kurbelwelle (106) des Fahrzeugs (100) und/oder von einem Drehzahlsensor (116) für eine Motordrehzahl des Fahrzeugs (100) stammen.

2. Verfahren (200) gemäß Anspruch 1, bei dem der Fahrzeugsensor (110) als ein Drucksensor oder Kraftstoffleistendrucksensor ausgeführt ist und/oder das Steuergerät (120) als ein Motorsteuergerät ausgeführt ist.

3. Verfahren (200) gemäß einem der vorangegangenen Ansprüche, bei dem im Schritt (210) des Bestimmens die senderseitige Authentifizierungsinformation (135) unter Verwendung weiterer Messdaten (115) bestimmt wird, die mindestens einen Betriebsparameter des Fahrzeugs (100) in einem physikalischen und/oder funktionalen Wirkzusammenhang mit den Messdaten (112) und/oder Umgebungsbedingung des Fahrzeugs (100) repräsentieren.

4. Verfahren (200) gemäß einem der vorangegangenen Ansprüche, bei dem im Schritt (210) des Bestimmens die senderseitige Authentifizierungsinformation (135) unter Verwendung einer Bestimmungsvorschrift (133) bestimmt wird, die einen kryptografischen Algorithmus, einen geheimen kryptografischen Schlüssel und/oder einen bei jeder ausgegebenen Nachricht (137) inkrementierten Zählerwert aufweist.

5. Verfahren (200) gemäß einem der vorangegangenen Ansprüche, bei dem im Schritt (210) des Bestimmens die senderseitige Authentifizierungsinformation (135) unter Verwendung weiterer Messdaten (115) bestimmt wird, die in einem dem Steuergerät (120) bekannten zeitlichen Zusammenhang mit den Messdaten (112) stehen und/oder mit einem Zeitstempel versehen sind.

6. Verfahren (200) gemäß einem der vorangegangenen Ansprüche, mit einem Schritt (202) des Erfassens der Messdaten (112) unter Verwendung des Fahrzeugsensors (110) und/oder mit einem Schritt (204) des Einlesens der weiteren Messdaten (115) von dem zumindest einen weiteren Fahrzeugsensor (114, 116).

7. Verfahren (300) zum Empfangen von Messdaten (112) eines Fahrzeugsensors (110) eines Fahrzeugs (100) seitens eines Steuergeräts (120) des Fahrzeugs (100), wobei das Verfahren (300) folgende Schritte aufweist:
Einlesen (310) einer nach dem Verfahren (200) gemäß einem der vorangegangenen Ansprüche erzeugten Nachricht (137);
Zerlegen (320) der Nachricht (137), um die Messdaten (112) und die senderseitige Authentifizierungsinformation (135) zu erhalten;
Ermitteln (330) einer empfängerseitigen Authentifizierungsinformation (145) zum Authentifizieren der an das Steuergerät (120) übertragenen Messdaten (112) des Fahrzeugsensors (110), wobei die empfängerseitige Authentifizierungsinformation (145) unter Verwendung der Bestimmungsvorschrift (133) und der weiteren Messdaten (115) ermittelt wird; und
Durchführen (340) eines Vergleichs der empfängerseitigen Authentifizierungsinformation (145) und der senderseitigen Authentifizierungsinformation (135) miteinander, um abhängig von einem Ergebnis des Vergleichs eine Authentizität der Messdaten (112) festzustellen.

8. Verfahren (300) gemäß Anspruch 7, bei dem im Schritt (330) des Ermittelns die weiteren Messdaten (115) bezüglich der Messdaten (112) für die Ermittlung der empfängerseitigen Authentifizierungsinformation (145) auf Plausibilität geprüft werden, und/oder wobei der Schritt (330) des Ermittelns unter Verwendung einer Frequenzmessung, einer Tiefpassfilterung, eines Phasendetektors, eines Quadratur-Demodulators und/oder einer messwerttypischen Signalcharakteristik, insbesondere einer Messwertschwankungsamplitude, durchgeführt wird.

9. Verfahren (300) gemäß Anspruch 8, bei dem im Schritt (330) des Ermittelns die Plausibilitätsprüfung unter Verwendung einer Frequenzmessung, einer Tiefpassfilterung, eines Phasendetektors, eines Quadratur-Demodulators, einer messwerttypischen Signalcharakteristik, insbesondere einer Messwertschwankungsamplitude, und/oder mindestens einer modellierten Messgröße durchgeführt wird.

10. Verfahren (400) zur Kommunikation zwischen einem Fahrzeugsensor (110) eines Fahrzeugs (100) und einem Steuergerät (120) des Fahrzeugs (100), wobei das Verfahren (400) folgende Schritte aufweist:
Bereitstellen (410) von Messdaten (112) des Fahrzeugsensors (110) für das Steuergerät (120) nach dem Verfahren (200) gemäß einem der Ansprüche 1 bis 6; und
Empfangen (420) der Messdaten (112) des Fahrzeugsensors (110) seitens des Steuergeräts (120) nach dem Verfahren (300) gemäß einem der Ansprüche 7 bis 9.

11. Fahrzeug (100) mit einer Vorrichtung (130, 140), die eingerichtet ist, um die Schritte eines Verfahrens (200, 300, 400) gemäß Anspruch 10 in entsprechenden Einheiten (132, 136, 142, 144, 146, 148) auszuführen und/oder anzusteuern.

12. Computerprogramm, das dazu eingerichtet ist, die Schritte eines Verfahrens (200, 300, 400) gemäß einem der Ansprüche 1 bis 10 auszuführen und/oder anzusteuern.

13. Maschinenlesbares Speichermedium, auf dem das Computerprogramm nach Anspruch 12 gespeichert ist.

## Claims

1. Method (200) for providing measurement data (112) of a vehicle sensor (110) of a vehicle (100) for a control unit (120) of the vehicle (100), wherein the method (200) comprises the following steps:
determining (210) transmitter-side authentication information (135) for authenticating the measurement data (112) of the vehicle sensor (110) that are to be transmitted to the control unit (120), wherein the transmitter-side authentication information (135) is determined using a determination rule (133); and
generating (220), using the measurement data (112) and the transmitter-side authentication information (135), a message (137) to be output to the control unit (120),
**characterized in that**,
in the determination step (210), the transmitter-side authentication information (135) is determined using further measurement data (115) of at least one further vehicle sensor (114, 116) of the vehicle (100) that are accessible to both the vehicle sensor (110) and the control unit (120), wherein the further measurement data (115) come from a position sensor (114) for a position of a crankshaft (106) of the vehicle (100) and/or from a speed sensor (116) for an engine speed of the vehicle (100).

2. Method (200) according to Claim 1, wherein the vehicle sensor (110) is implemented as a pressure sensor or fuel rail pressure sensor and/or the control unit (120) is implemented as an engine control unit.

3. Method (200) according to either of the preceding claims, wherein, in the determination step (210), the transmitter-side authentication information (135) is determined using further measurement data (115) which represent at least one operating parameter of the vehicle (100) in a physical and/or functional causal relationship with the measurement data (112) and/or environmental condition of the vehicle (100).

4. Method (200) according to one of the preceding claims, wherein, in the determination step (210), the transmitter-side authentication information (135) is determined using a determination rule (133) which comprises a cryptographic algorithm, a secret cryptographic key, and/or a counter value that is incremented each time a message (137) is output.

5. Method (200) according to one of the preceding claims, wherein, in the determination step (210), the transmitter-side authentication information (135) is determined using further measurement data (115) which are in a temporal relationship with the measurement data (112) that is known to the control unit (120) and/or are provided with a time stamp.

6. Method (200) according to one of the preceding claims, having a step (202) of detecting the measurement data (112) using the vehicle sensor (110) and/or having a step (204) of reading the further measurement data (115) from the at least one further vehicle sensor (114, 116).

7. Method (300) for receiving measurement data (112) of a vehicle sensor (110) of a vehicle (100) by a control unit (120) of the vehicle (100), wherein the method (300) comprises the following steps:
reading (310) a message (137) generated in accordance with the method (200) according to one of the preceding claims;
parsing (320) the message (137) in order to obtain the measurement data (112) and the transmitter-side authentication information (135);
ascertaining (330) receiver-side authentication information (145) for authenticating the measurement data (112) of the vehicle sensor (110) that are transmitted to the control unit (120), wherein the receiver-side authentication information (145) is ascertained using the determination rule (133) and the further measurement data (115); and
carrying out (340) a comparison of the receiver-side authentication information (145) and the transmitter-side authentication information (135) with each other in order to establish authenticity of the measurement data (112) on the basis of a result of the comparison.

8. Method (300) according to Claim 7, wherein, in the ascertainment step (330), the further measurement data (115) are checked for plausibility with respect to the measurement data (112) for ascertaining the receiver-side authentication information (145), and/or wherein the ascertainment step (330) is carried out using a frequency measurement, a low-pass filtering, a phase detector, a quadrature demodulator, and/or a signal characteristic that is typical of a measurement value, in particular a measurement value fluctuation amplitude.

9. Method (300) according to Claim 8, wherein, in the ascertainment step (330), the plausibility check is carried out using a frequency measurement, a low-pass filtering, a phase detector, a quadrature demodulator, a signal characteristic that is typical of a measurement value, in particular a measurement value fluctuation amplitude, and/or at least one modelled measurement variable.

10. Method (400) for communication between a vehicle sensor (110) of a vehicle (100) and a control unit (120) of the vehicle (100), wherein the method (400) comprises the following steps:
providing (410) measurement data (112) of the vehicle sensor (110) for the control unit (120) in accordance with the method (200) according to one of Claims 1 to 6; and
receiving (420) the measurement data (112) of the vehicle sensor (110) by the control unit (120) in accordance with the method (300) according to one of Claims 7 to 9.

11. Vehicle (100) having a device (130, 140) which is set up to implement and/or control the steps of a method (200, 300, 400) according to Claim 10 in corresponding units (132, 136, 142, 144, 146, 148).

12. Computer program which is set up to implement and/or control the steps of a method (200, 300, 400) according to one of Claims 1 to 10.

13. Machine-readable storage medium on which the computer program according to Claim 12 is stored.

## Revendications

1. Procédé (200) pour fournir des données de mesure (112) d'un capteur de véhicule (110) d'un véhicule (100) à un appareil de commande (120) du véhicule (100), le procédé (200) présentant les étapes suivantes :
la détermination (210) d'une information d'authentification côté émetteur (135) pour authentifier les données de mesure (112) du capteur du véhicule (110) à transmettre à l'appareil de commande (120), l'information d'authentification côté émetteur (135) étant déterminée à l'aide d'une règle de détermination (133) ; et
la génération (220) d'un message (137) à envoyer à l'appareil de commande (120) à l'aide des données de mesure (112) et de l'information d'authentification côté émetteur (135),
**caractérisé en ce que**
à l'étape (210) de détermination, l'information d'authentification côté émetteur (135) est déterminée en utilisant à la fois le capteur du véhicule (110) et d'autres données de mesure (115) accessibles à l'appareil de commande (120) d'au moins un autre capteur de véhicule (114, 116) du véhicule (100), les autres données de mesure (115) provenant d'un capteur de position (114) pour une position d'un vilebrequin (106) du véhicule (100) et/ou d'un capteur de vitesse de rotation (116) pour une vitesse de rotation du moteur du véhicule (100).

2. Procédé (200) selon la revendication 1, dans lequel le capteur de véhicule (110) est conçu sous la forme d'un capteur de pression ou d'un capteur de pression de carburant et/ou l'appareil de commande (120) est conçu sous la forme d'un appareil de commande de moteur.

3. Procédé (200) selon l'une quelconque des revendications précédentes, dans lequel, à l'étape (210) de détermination, l'information d'authentification côté émetteur (135) est déterminée à l'aide d'autres données de mesure (115) qui représentent au moins un paramètre de fonctionnement du véhicule (100) en relation physique et/ou fonctionnelle avec les données de mesure (112) et/ou les conditions environnementales du véhicule (100).

4. Procédé (200) selon l'une quelconque des revendications précédentes, dans lequel, à l'étape (210) de détermination, l'information d'authentification côté émetteur (135) est déterminée à l'aide d'une règle de détermination (133) qui présente un algorithme cryptographique, une clé cryptographique secrète et/ou une valeur de compteur incrémentée à chaque message émis (137).

5. Procédé (200) selon l'une quelconque des revendications précédentes, dans lequel, à l'étape (210) de détermination, l'information d'authentification côté émetteur (135) est déterminées à l'aide d'autres données de mesure (115) qui sont liées dans le temps aux données de mesure (112) d'une manière connue de l'appareil de commande (120) et/ou qui sont pourvues d'un horo-datage.

6. Procédé (200) selon l'une quelconque des revendications précédentes, comprenant une étape (202) d'acquisition des données de mesure (112) à l'aide du capteur de véhicule (110) et/ou une étape (204) de lecture des autres données de mesure (115) par l'au moins un autre capteur de véhicule (114, 116).

7. Procédé (300) pour recevoir des données de mesure (112) d'un capteur de véhicule (110) d'un véhicule (100) par un appareil de commande (120) du véhicule (100), le procédé (300) présentant les étapes suivantes :
la lecture (310) d'un message (137) généré par le procédé (200) selon l'une quelconque des revendications précédentes ;
la décomposition (320) du message (137) afin d'obtenir les données de mesure (112) et l'information d'authentification côté émetteur (135) ;
la détermination (330) d'une information d'authentification côté récepteur (145) pour authentifier les données de mesure (112) du capteur du véhicule (110) transmises à l'appareil de commande (120), les informations d'authentification côté récepteur (145) étant déterminées à l'aide de la règle de détermination (133) et des autres données de mesure (115) ; et
la réalisation (340) d'une comparaison entre l'information d'authentification côté récepteur (145) et l'information d'authentification côté émetteur (135) afin de déterminer une authenticité des données de mesure (112) en fonction d'un résultat de la comparaison.

8. Procédé (300) selon la revendication 7, dans lequel, à l'étape (330) de détermination, les autres données de mesure (115) relatives aux données de mesure (112) sont vérifiées quant à leur plausibilité pour la détermination de l'information d'authentification côté récepteur (145), et/ou dans lequel l'étape (330) de détermination est effectuée à l'aide d'une mesure de fréquence, d'un filtrage passe-bas, d'un détecteur de phase, d'un démodulateur en quadrature et/ou d'une caractéristique de signal typique de la valeur mesurée, notamment d'une amplitude de fluctuation de la valeur mesurée.

9. Procédé (300) selon la revendication 8, dans lequel, à l'étape (330) de détermination, le contrôle de plausibilité est effectué à l'aide d'une mesure de fréquence, d'un filtrage passe-bas, d'un détecteur de phase, d'un démodulateur en quadrature, d'une caractéristique de signal typique de la valeur mesurée, notamment d'une amplitude de fluctuation de la valeur mesurée, et/ou d'au moins une grandeur de mesure modélisée.

10. Procédé (400) de communication entre un capteur de véhicule (110) d'un véhicule (100) et un appareil de commande (120) du véhicule (100), le procédé (400) présentant les étapes suivantes :
la fourniture (410) de données de mesure (112) du capteur du véhicule (110) à l'appareil de commande (120) par le procédé (200) selon l'une quelconque des revendications 1 à 6 ; et
la réception (420) des données de mesure (112) du capteur de véhicule (110) par l'appareil de commande (120) par le procédé (300) selon l'une quelconque des revendications 7 à 9.

11. Véhicule (100) comprenant un dispositif (130, 140) qui est adapté pour exécuter et/ou commander les étapes d'un procédé (200, 300, 400) selon la revendication 10 dans des unités correspondantes (132, 136, 142, 144, 146, 148).

12. Programme informatique qui est adapté pour exécuter et/ou commander les étapes d'un procédé (200, 300, 400) selon l'une quelconque des revendications 1 à 10.

13. Support de stockage lisible par machine, sur lequel est stocké le programme informatique selon la revendication 12.
